# EUROPÄISCHE PATENTSCHRIFT

(11) **EP 2 509 832 B1**
(45) Veröffentlichungstag und Bekanntmachung des Hinweises auf die Patenterteilung: **05.08.2015**
(21) Anmeldenummer: 10775719.7
(22) Anmeldetag: 27.10.2010
(51) Int. Cl.: B60T 8/1755, B60T 8/32, B60T 7/22, B60R 21/01, B60T 8/48, B60T 17/22, B60W 30/085, B60W 30/10, B60W 30/14

(54) **FAHRERASSISTENZSYSTEM FÜR EIN FAHRZEUG, INSBESONDERE NUTZFAHRZEUG, SOWIE VERFAHREN ZUM STEUERN EINES BREMSSYSTEMS**
DRIVER ASSITANT SYSTEM FOR VEHICLE, ESPECIALLY UTILITY VEHICLE, AND METHOD FOR CONTROLLING A BRAKE SYSTEM
SYSTÈME D'ASSITANCE À UN CONDUCTEUR DE VÉHICULE, EN PARTICULIER DE VÉHICULE UTILITAIRE, ET PROCÉDÉ POUR CONTRÔLLER UN SYSTÈME DE FREINAGE

(30) Priorität: 12.12.2009 DE 102009058154
(43) Veröffentlichungstag der Anmeldung: 17.10.2012
(73) Patentinhaber: WABCO GmbH, 30453 Hannover (DE)
(72) Erfinder: BREUER, Karsten, 31867 Lauenau (DE); DIECKMANN, Thomas, 30982 Pattensen (DE); WALLBAUM, Torsten, 31089 Duingen (DE)
(74) Vertreter: Lauerwald, Jörg
(86) Internationale Anmeldenummer: PCT/EP2010/006545
(87) Internationale Veröffentlichungsnummer: WO 2011/069582

(56) Entgegenhaltungen:
- EP-A2- 1 127 761
- EP-A2- 1 616 764
- WO-A2-2004/045898

## Beschreibung

Die Erfindung betrifft ein Fahrerassistenzsystem für ein Fahrzeug, insbesondere Nutzfahrzeug, ein Fahrzeugsystem mit einem derartigen Fahrerassistenzsystem sowie ein Verfahren zum Steuern eines Bremssystems.

Fahrerassistenzsysteme dienen im Allgemeinen zur Unterstützung des Fahrers bei seiner Fahraufgabe in dem von ihm gesteuerten Fahrzeug. Sie können insbesondere Umfelderkennungssysteme sein, die fremde Objekte durch geeignete Sensoren detektieren, um das Fahrverhalten des Fahrzeugs entsprechend zu ändern. Hierbei kann zum einen eine Kollision mit dem detektierten externen Objekt verhindert oder die Unfallschwere verringert werden, indem das Fahrzeug geeignet abgebremst wird. Weiterhin kann ein vorausfahrendes Fahrzeugs detektiert und eine Abstandsregelung durchgeführt werden, z. B. als ACC (adaptive cruise control) oder auch als Konvoifahrt des Fahrzeugs in einer Kolonne aus mehreren Fahrzeugen. Als Umfelderkennungssensoren können insbesondere radar- oder ultraschallbasierte Sensoren zur Entfernungsdetektion, sowie Videosysteme zur Erfassung und Detektion der Objekte und ggf. Abstandserkennung durch Auswertung von Stereobildern sein. Weiterhin können die Fahrerassistenzsysteme auch Systeme sein, die einen kritischen Fahrzustand, z. B. eine Umkippneigung des Fahrzeugs oder Schleuderneigung des Fahrzeugs erkennen und dies der Bremssteuereinrichtung mitteilen. EP 1 616 764 A2 beschreibt ein gattungsgemäßes System nach dem Oberbegriff des Anspruchs 1.

Fahrerassistenzsysteme als von der Bremssteuereinrichtung getrennt ausgeführte Systeme können so genannte externe Bremsanforderungssignale an die Bremssteuereinrichtung des Bremssystems ausgeben, insbesondere über einen Datenbus. Somit führt die Bremssteuereinrichtung eine Steuerung der Bremsen auf Grundlage interner Bremssignale, die insbesondere den vom Fahrer über einen Bremswertgeber eingegebenen Soll- Bremswunsch und z. B. interne Regelungen wie ABS oder auch eine Stabilitätsregelung umfassen können, und der zusätzlichen externen Bremsanforderungssignale durch.

Die DE 101 18 708 A1 und DE 101 18 707 A1 beschreiben Verfahren zur Regelung einer Fahrzeuggeschwindigkeit sowie zur Kollisionsverhinderung, bei denen bei Erkennen eines möglichen baldigen Bremseingriffs ein hydraulisches Bremssystem vorgespannt werden kann, indem der Bremsdruck der Bremshydraulik bereits erhöht wird, ohne dass bereits eine nennenswerte Bremsung eingeleitet wird. Hierzu kann von einer Entscheidungseinheit, die auch ein Bremsanforderungssignal S1 des Fahrers aufnimmt, ein entsprechendes Flag gesetzt werden. Somit kann nachfolgend die tatsächliche Bremsung schneller durchgeführt werden, da nicht zunächst der entsprechende Druckaufbau der Bremshydraulik einzuleiten ist, so dass bei tatsächlichen Bremsung Zeit gewonnen werden kann.

Eine derartige Vorspannung bei Erkennen einer höheren Kollisionswahrscheinlichkeit kann in einem hydraulischen Bremssystem direkt intern durch die Steuereinrichtung durchgeführt werden. Bei pneumatischen Bremssystemen von Nutzfahrzeugen sind Umfelderkennungssysteme jedoch im Allgemeinen als externe Systeme ausgebildet, die mit der Bremssteuereinrichtung kommunizieren, z. B. über einen fahrzeuginternen Daten-Bus wie den CAN-Bus und geeignete Protokolle. Die externe Anforderung einer Vorspannung ohne bzw. ohne relevante Bremswirkung würde somit einen eigenen Befehlssatz erfordern, der mit derzeitigen Systemen nicht realisierbar ist.

Bei pneumatischen Bremssystem eines Nutzfahrzeugbereich können externe Bremsanforderungen über verschiedene Normen angefordert werden. Die SAE-J1939 beschreibt die Protokollierung derartiger externer Bremsanforderungen; demnach beinhaltet eine externe Bremsanforderung Angaben über die Priorität, den Steuermodus (control mode) und den Beschleunigungs-Sollwert.

Die Angabe der Priorität ist relevant, da gemäß dieser Norm das externe Bremsanforderungssignal dauerhaft von dem externen System ausgegeben wird, so dass bei Fehlen einer tatsächlich erforderlichen Bremswirkung eine geringe Priorität angegeben wird; bei einem Prioritätssignal mit drei Stufen kann somit die unterste Priorität (lowest priority) angegeben werden. Der Steuermodus kann insbesondere additiv oder maximal sein kann; bei einem additiven Steuermodus wird die externe Bremsanforderung zusätzlich (additiv) zu der intern eingestellten Bremswirkung eingestellt, bei einem maximalen Steuermodus wird hingegen eine Maximalwertbildung durchgeführt, d. h. es wird jeweils der höchste Wert der internen Bremsanforderung und externen Bremsanforderung gebildet. Weiterhin weist das externe Bremsanforde rungssignal eine Angabe über die einzustellende Soll-Beschleunigung bzw. den Beschleunigungs-Sollwert auf, wobei Abbremsungen entsprechend einen negativen Wert aufweisen.

Der Erfindung liegt die Aufgabe zu Grunde, ein Fahrerassistenzsystem für ein Fahrzeug, ein Fahrzeugsystem mit einem derartigen Fahrerassistenzsystem sowie ein entsprechendes Verfahren zum Steuern eines Bremssystems zu schaffen, die mit relativ geringem Aufwand eine schnelle Einleitung eines Bremsvorgangs in kritischen Situationen ermöglichen.

Diese Aufgabe wird durch ein Fahrerassistenzsystem nach Anspruch 1, ein Fahrzeugsystem nach Anspruch 11 und ein Verfahren nach Anspruch 13 gelöst. Die Unteransprüche beschreiben bevorzugte Weiterbildungen.

Erfindungsgemäß wird ein Vorspannen des Bremssystems bereits bei Erkennen einer hinreichenden Wahrscheinlichkeit eines kritischen Zustandes durch ein externes Fahrerassistenzsystem ermöglicht, um später eine ggf. erforderliche Bremsung schneller einleiten zu können. Je nach Fahrerassistenzsystem können unterschiedliche kritische Zustände erkannt werden. Bei einem Umfelderkennungssystem kann insbesondere eine Kollisionswahrscheinlichkeit erkannt werden. Bei einem externen Fahrstabilitätssystem können Instabilitäten des Fahrzeugs selbst oder auch instabile Zustände anderer Fahrzeuge eines Gespanns erkannt werden und hieraus ein externes Bremsanforderungssignal gebildet und zu der Bremssteuereinrichtung geschickt werden.

Erfindungsgemäß wird insbesondere der Einsatz in Nutzfahrzeugen ermöglicht, bei denen im Allgemeinen pneumatische Bremsen eingesetzt werden, bei denen höhere Massenträgheiten und höhere Totzeiten zur Überwindung des Lüftspiels und Befüllung der Radbremszylinder mit dem Bremsmedium vorliegen, z. B. 200 bis 300 ms bei einem EBS und 500 bis 700 ms bei einem ABS, gegenüber z. B. Werten von 100 bis 150 ms bei einem hydraulischen Bremssystem.

Unter einem externen Fahrerassistenzsystem wird erfindungsgemäß ein Fahrerassistenzsystem verstanden, das nicht als Teil des Bremsssteuersystems eingerichtet ist und somit eine Bremsanforderung als externes Bremsanforderungssignal an die Bremssteuereinrichtung ausgibt. Dies kann insbesondere über einen Datenbus des Fahrzeugs, insbesondere den CAN-Bus erfolgen. Unter dem Vorspannen des Bremssystems wird eine Erhöhung des Drucks im Bremsmedium verstanden, um einen Leerweg bzw. Lüftspiel zu überwinden, so dass Bremsflächen bereits ganz oder weitgehend in Kontakt miteinander kommen, wobei gegebenenfalls bereits ein kleiner Verschleiß an den Bremsflächen mit gegebenenfalls vernachlässigbarer Bremswirkung eintritt.

Der Erfindung liegt hierbei der Gedanke zu Grunde, ein Vorspannen des Bremssystems über ein externes Bremsanforderungssignal zu ermöglichen, das im Allgemeinen in derartigen Fahrzeugen grundsätzlich bereits vorhanden ist und auch zur Einleitung eines tatsächlichen Bremsvorgangs eingesetzt wird. Hierbei wird dieses externe Bremsanforderungssignal erfindungsgemäß derartig eingestellt, dass ein hoher Beschleunigungssollwert angegeben wird, der bei Aufnahme des Signals durch die Bremssteuereinrichtung nicht zur Einleitung einer tatsächlichen Bremsung führen wird. Hierbei kann insbesondere ein Beschleunigungs-Sollwert vorgegeben werden, der oberhalb des aktuellen Ist-Beschleunigungswertes liegt, d.h. unter Berücksichtigung von Vorzeichen und Betrag auf eine höhere Beschleunigung gerichtet ist und somit durch eine Bremsung nicht zu erreichen ist, so dass das Bremssystem durch Betätigung von Bremsen diesen Wert nicht einstellen kann. Dennoch wird vorteilhafterweise eine hohe Priorität gesetzt, so dass das Signal zu beachten ist.

Somit wird das Vorspannen des Bremssystems durch grundsätzlich bereits vorhandene Systeme und vorhandene Protokolle ermöglicht. Die Bremssteuereinrichtung kann das externe Bremsanforderungssignal aufnehmen und derartig interpretieren, dass derzeit noch keine tatsächliche Bremsung eingeleitet wird, jedoch aufgrund der hohen Priorität bereits ein Vorspannvorgang zur Überwindung der Totzeit eingeleitet wird. Hierbei ist die Ausgabe eines derartigen externen Bremsanforderungssignals für die Fahrzeugsicherheit unkritisch, da ja noch keine tatsächliche Bremsung eingeleitet wird und allenfalls durch ein leichtes Anliegen der Bremsbeläge an der Bremsscheibe eine unwesentliche Verzögerung bewirkt wird.

Somit kann erfindungsgemäß mit einer gegebenen Protokollierung auf überraschend einfache Weise durch ein externes System ein Vorspannen des Bremssystems eingeleitet werden.

Erfindungsgemäß ist ein Einsatz z. B. in einem Notbremssystem wie AEBS, einem Kollisionsfolgenminderungssystem wie CMS, einem Kollisionswarnsystem wie CWS, einem Abstandshaltesystem wie ACC oder einem Konvoisystem für mehrere Fahrzeuge, weiterhin einem Bremsassistent mit Vorausschau, einem Niedergeschwindigkeitskollisionswarnsystem, insbesondere für Abbiegevorgänge, zum Schutz für Fußgänger, Fahrradfahrer, und anderen schwächeren Verkehrsteilnehmern wie BSD, und bei einem Fahrstabilitätssystem z. B. zu Erkennung von Überschlagsneigungen möglich, z. B. als RSC (Roll Stability Control).

Die Erfindung wird im Folgenden anhand der beiliegenden Zeichnungen an einigen Ausführungsformen näher erläutert. Es zeigen:
- Fig. 1: ein erfindungsgemäßes Nutzfahrzeug mit einem erfindungsgemäßen Fahrerassistenzsystem bei Fahrt auf einer Straße;
- Fig. 2: den Aufbau eines erfindungsgemäßen externen Bremsanforderungssignals;
- Fig. 3: ein Flussdiagramme eines erfindungsgemäßen Verfahrens.

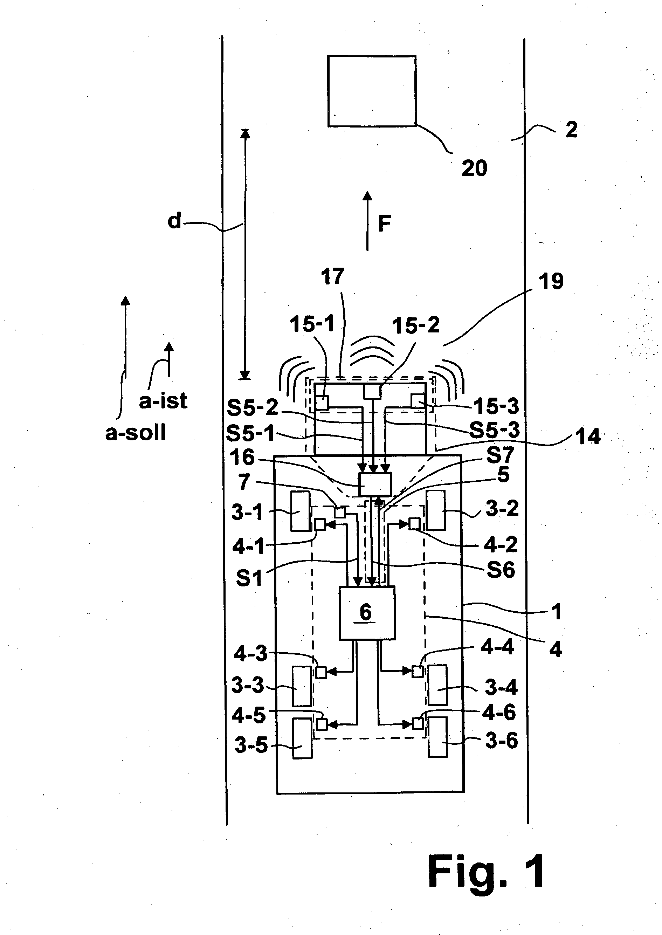

Ein Fahrzeug 1 fährt auf einer Fahrbahn 2 in Fahrtrichtung F. Das Fahrzeug 1 ist hier ein Nutzfahrzeug mit drei Achsen und somit sechs Rädern 3-1, 3-2, 3-3, 3-4, 3-5 und 3-6. Sein Bremssystem 4 weist pneumatische Bremsen 4-1, 4-2, 4-3, 4-4, 4-5, 4-6 auf, die jeweils auf die Räder 3-1 bis 3-6 einwirken, so dass das Fahrzeug 1 z. B. radweise oder achsweise abgebremst werden kann. Hierbei ist z. B. ein nicht gezeigter gemeinsamer Druckluftspeicher für sämtliche Bremsen 4-1 bis 4-6, oder auch bei einem zweikanaligen Bremssystem entsprechend zwei derartige Druckluftspeicher zur Druckluftversorgung der pneumatischen Bremsen 4-1 bis 4-6 vorgesehen. Das Bremssystem 4 weist weiterhin eine Bremssteuereinrichtung 6 auf, die insbesondere als an sich bekanntes Steuergerät ausgebildet sein kann. Grundsätzlich kann die Bremssteuereinrichtung 6 jedoch auch durch mehrere Einheiten gebildet werden. Die Bremssteuereinrichtung 6 nimmt Bremsanforderungssignale S1 von einem hier angedeuteten Bremswertgeber 7 auf, der insbesondere vom Fahrer in an sich bekannter Weise über das Bremspedal betätigt werden kann. Das Fahrzeug 1 fährt mit einer Längsbeschleunigung a-ist, die in dem gezeigten Beispiel der Fig. 1 positiv ist.

In der Bremssteuereinrichtung 6 kann weiterhin eine Fahrstabilitätsregelung implementiert sein, die aus Sensorsignalen einen Fahrzustand des Fahrzeugs 1 detektiert und in Abhängigkeit hiervon Stabilitätseingriffe anfordern kann, die zu einer Bremsbetätigung der einzelnen Bremsen 4-1 bis 4-6 führen. Dies kann z. B. eine ABS-Regelung sein, weiterhin z. B. auch eine komplexere Fahrstabilitätsregelung zur Vermeidung instabiler Zustände wie Schleudern, Kippen usw., wozu z. B. die Gierrate und Querbeschleunigung gemessen werden können. Diese Bremsanforderungen stellen hier interne Bremsanforderungen des Bremssystems 4 dar.

Das Fahrzeug 1 weist weiterhin ein Fahrerassistenzsystem 14 auf, das ein Umfelderkennungssystem 17 sowie eine Steuereinheit 16 aufweist. Das Umfelderkennungssystem 17 weist wiederum ein oder mehrere Umfeldsensoren 15-1 15-2 und 15-3 und gegebenenfalls weitere Elemente auf. Die Steuereinheit 16 kann aber auch als Teil eines der verwendeten Sensoren 15-1, 15-2 und 15-3 ausgeführt sein. Die Sensoren 15-1 bis 15-3 sind z. B. auf Radar-, Laser-, Videobild- oder Ultraschall-Basis ausgelegt und detektieren fremde Objekte 20 in einem Umfeld 19 auf oder neben der Fahrbahn 2. Hierbei wird z. B. ein Abstand d des Fahrzeugs 1 zu dem Objekt 20 detektiert. Das Fahrerassistenzsystem 14 kann z. B. ein ACC (Adaptive Cruise Control) zur Einstellung eines vorgegebenen Abstandes d zu einem vorausfahrenden Fahrzeug 20 sein, oder auch ein System zur automatischen Kolonnenfahrt mit mehreren weiteren Fahrzeugen 20. Weiterhin kann das Fahrerassistenzsystem 14 auch ein Kollisionswarnsystem, oder ein System zur Kollisionsvermeidung bzw. Verringerung möglicher Kollisionsschäden sein.

Die Sensoren 15-1 bis 15-3 geben Messsignale S5-1, S5-2, S5-3 an die Steuereinheit 16, die auf der Grundlage dieser Signale S5-1 bis S5-3 und ggf. gespeicherter Daten eine Bremsanforderung ermittelt und ein externes Bremsanforderungssignal S6 an die Bremssteuereinrichtung 6 ausgibt, z. B. über einen fahrzeuginternen Datenbus wie den CAN-Bus 5. Das externe Bremsanforderungssignal S6 kann wahlweise eine Bremsung einzelner oder sämtlicher Räder 3-1 bis 3-6 anfordern. Die hierdurch angeforderte Bremsung wird somit nach Aufnahme des externen Bremsanforderungssignals S6 von der Bremssteuereinrichtung 6 entsprechend dem Inhalt des externen Bremsanforderungssignals S6 eingeleitet. Das Bremsanforderungssignal S6 kann z. B. eine XBR-Botschaft (external brake request) sein gemäß der Norm SAE J1939-71.

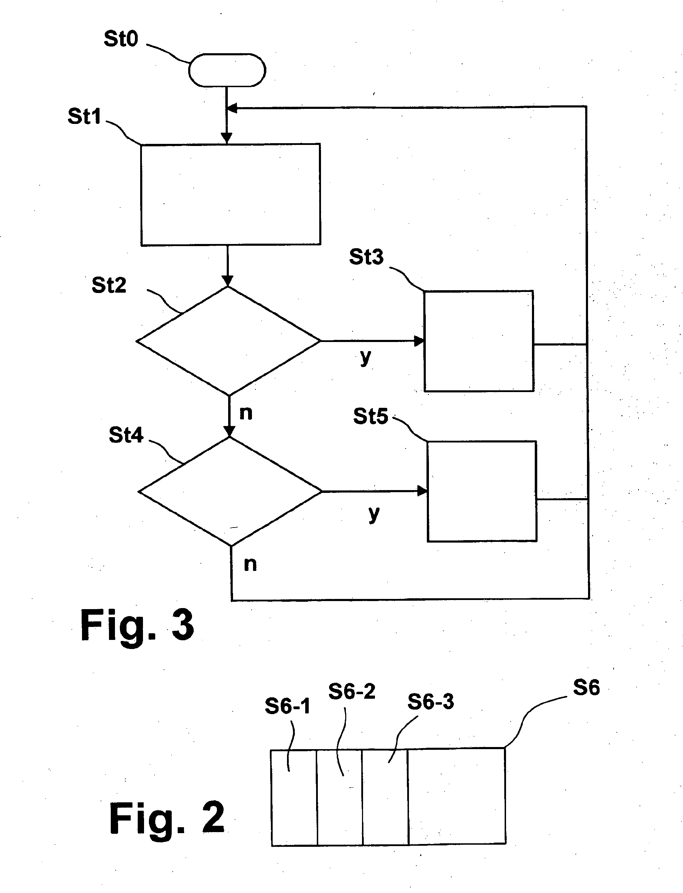

Figur 2 zeigt den Aufbau des externen Bremsanforderungssignals S6 in schematisierter Form: Das Signal S6 enthält demnach ein Prioritätssignal S6-1 zur Angabe, mit welcher Priorität dieses gesamte Bremsanforderungssignals S6 zu behandeln ist. Hierbei kann das Prioritätssignal S6-1 z. B. drei Stufen, nämlich lowest, medium, highest einnehmen. Weiterhin weist das externe Bremsanforderungssignals S6 ein Steuermodussignal (Control Mode Signal) S6-2 auf, das z. B. den Wert "additiv" oder "maximum" annehmen kann; bei dem Modus "additiv" wird die externe Bremsanforderung der intern in dem Bremssystem 4 erzeugten Bremsanforderung additiv überlagert, so dass die externe Bremsanforderung zusätzlich bzw. additiv ausgeübt wird. Bei dem Modus "maximum" soll hingegen von der Bremssteuereinrichtung 6 nur der Maximalwert des von dem Bremssystem 4 bereits intern angeforderten Soll-Bremswertes und des externen Soll-Bremswertes gebildet werden; somit wird die extern angeforderte Soll-Bremswirkung nur eingestellt, wenn Sie höher ist als die interne Bremsanforderung. Das externe Bremsanforderungssignal S6 weist weiterhin ein Beschleunigungsanforderungssignal S6-3 auf, in dem der angeforderte Soll-Beschleunigungswert a-soll angegeben ist, z. B. mit negativem Vorzeichen bei Anforderung einer Abbremsung und positivem Vorzeichen bei Anforderung einer Beschleunigung des Fahrzeugs 1. Weiterhin kann das Bremsanforderungssignal S6 noch weitere Bestandteile aufweisen.

Das Fahrerassistenzsystem 14 ermittelt aus den Sensorsignalen S5-1 bis S5-3 z. B. eine Kollisionswahrscheinlichkeit und gibt in Abhängigkeit der ermittelten Kollisionswahrscheinlichkeit das externe Bremsanforderungssignal S6 aus. Erfindungsgemäß wird bereits bei Erkennen einer hinreichend hohen Kollisionswahrscheinlichkeit eine Veränderung des Bremssystems 4 angestrebt dahingehend, dass die Bremsen 4-1 bis 4-6 vorgespannt werden. Ein Vorspannen der pneumatischen Bremsen 4-1 bis 4-6 bedeutet hierbei, dass deren Lüftspiel überwunden wird und somit ggf. bereits eine leichte Anlage der Bremsbeläge an den Bremsscheiben vorliegen kann. Bei einem derartigen Vorspannen der Bremsen 4-1 bis 4-6 wird jedoch noch keine nennenswerte Bremsung eingeleitet.

Wenn die Steuereinheit 16 des Fahrerassistenzsystems 14 zur Vorbereitung einer - möglichen - späteren Bremsung eine derartige Vorspannung des Bremssystems 4 erreichen will, setzt sie das Prioritätssignal S6-1 auf den höchsten (oder einen hohen) Wert, das Steuermodussignal S6-2 auf Maximalwertbildung "maximum" und das Beschleunigungssollwert-Signal S6-3 bzw. sein Beschleunigungssollwert a-soll auf einen derartig hohen Wert, dass zu dessen Erreichung keine Bremsung eingeleitet wird. Dieser hohe Wert kann somit insbesondere positiv sein, d.h. eine Beschleunigung nach vorne. Dies ist beispielhaft in Fig. 1 durch den Pfeil für a-soll gezeigt, der größer als der Pfeil für a-ist ist.. Erfindungsgemäß wird somit das Beschleunigungssollwert-Signal S6-3 insbesondere auf einen unrealistisch hohen Wert gesetzt, der vorteilhafterweise durch die Bremsung gar nicht einstellbar ist; insbesondere kann ein Beschleunigungssollwert a-soll angefordert werden, der größer ist als die derzeitige Ist-Beschleunigung a-ist, d. h. eine stärkere, nach vorne gerichtete Beschleunigung bedeutet, die somit durch eine Bremswirkung ohnehin nicht eingestellt werden kann da dafür statt einer Brems- eine Antriebskraft benötigt würde.

Erfindungsgemäß interpretiert die Bremssteuereinrichtung 6 das externe Bremsanforderungssignal S6 dahingehend, dass bei hoher Priorität, Maximalwertbildung und einem derartig hohen externen Sollwert der Beschleunigung, dass er durch eine Bremswirkung nicht zu erreichen ist, ein Vorspannvorgang eingeleitet wird und das Lüftspiel der Bremsen 4-1 bis 4-6 überwunden wird. Dies wird in einem entsprechenden Antwortsignal S7 der Bremssteuereinrichtung 6 an die externe Steuereinheit 16 entsprechend bestätigt.

Das in Fig. 3 gezeigte erfindungsgemäße Verfahren startet somit in Schritt St0, z. B. bereits bei Einschalten der Zündung des Fahrzeugs 1. Nachfolgend führt das Fahrerassistenzsystem 14 gemäß Schritt St1 durchgängig eine Umfelderkennung durch, so dass seine Steuereinheit 16 entsprechend Messsignale S5-1 bis S5-3 seiner Sensoren 15 aufnimmt und auswertet. Falls in dem Entscheidungsschritt St2 eine direkt erforderliche Bremsung erkannt wird, wird gemäß Verzweigung y ein externes Bremsanforderungssignal S6 mit einer tatsächlichen Bremsanforderung ausgegeben, d. h. mit hohem Prioritätssignal und einem entsprechend vom Vorzeichen her negativen, vom Betrag her entsprechend hohen Beschleünigungssollwert-Signal S6-3, so dass die Bremssteuereinrichtung 6 in Schritt St3 eine sofortige Bremsung durchführt. Falls in Schritt St2 keine sofortige Bremsung erkannt wird, wird gemäß Verzweigung n in Schritt St4 überprüft, ob eine hinreichend hohe Kollisionswahrscheinlichkeit vorliegt, so dass eine Vorspannung des Bremssystems 4 angestrebt wird. Falls diese hinreichend hohe Kollisionswahrscheinlichkeit vorliegt, wird gemäß Verzweigung y das erfindungsgemäße externe Bremsanforderungssignal S6 mit hoher Priorität, Maximalwert-Modus und hinreichend hohem Beschleunigungssollwert-Signal S6-3 ausgegeben, so dass die Bremssteuereinrichtung 6 erkennt, dass keine tatsächliche Bremsung gewünscht ist, jedoch bereits eine Vorspannung des Bremssystems 4 eingeleitet werden soll, und in Schritt St5 dies Vorspannung einleitet.

Gegebenenfalls sind in den Verfahren gemäß Figur 3 noch weitere Schritte und ergänzende Bremseingriffe durchführbar; dieses Flussdiagramm zeigt nur die erfindungsgemäß relevantesten Schritte. Das Verfahren wird von allen Schritten St3 und St5 wiederum vor den Schritt St1 zurückgesetzt.

## Patentansprüche

1. Fahrerassistenzsystem (14) für ein Fahrzeug (1), insbesondere Nutzfahrzeug, wobei das Fahrerassistenzsystem (14) aufweist:
ein Detektionssystem (17), das mindestens einen Sensor (15-1, 15-2, 15-3) zur Ausgabe von Messsignalen (S5-1, S5-2, S5-3) aufweist, eine Steuereinheit (16) zur Aufnahme der Messsignale (S5-1, S5-2, S5-3) und Ermittlung einer Wahrscheinlichkeit einer kritischen Situation oder eines kritischen Zustandes des Fahrzeugs (1),
wobei die Steuereinheit (16) des Fahrerassistenzsystems (14) bei Erkennen eines kritischen Zustands oder einer hinreichenden Wahrscheinlichkeit eines kritischen Zustands ein Signal (S6) zum Vorspannen eines Bremssystems (4) an eine Bremssteuereinrichtung (6) des Bremssystems (4) des Fahrzeugs (1) ausgibt, und
wobei die Steuereinheit (16) an die Bremssteuereinrichtung (6) des Bremssystems (4) ein externes Bremsanforderungssignal (S6) zur Einleitung von Bremsvorgängen über eine Datenleitung ausgibt,
**dadurch gekennzeichnet, dass**
die Steuereinheit (16) zum Vorspannen des Bremssystems (4) ein externes Bremsanforderungssignal (S6) über eine Datenleitung ausgibt, das ein Beschleunigungssollwert-Signal (S6-3) mit einem höheren Beschleunigungs-Sollwert (a-soll) als einem aktuellen Beschleunigungs-Istwert (a-ist) aufweist.

2. Fahrerassistenzsystem (14) nach Anspruch 1, **dadurch gekennzeichnet, dass** es außerhalb des Bremssystems (4) ausgebildet ist und die externen Bremsanforderungssignale (S6) über eine Datenleitung (5), insbesondere einen Datenbus (5) des Fahrzeugs an die Bremssteuereinrichtung (6) ausgibt.

3. Fahrerassistenzsystem (14) nach Anspruch 1 oder 2, **dadurch gekennzeichnet, dass** das externe Bremsanforderungssignal (S6) ein Prioritätssignal (S6-1) enthält, das zur Einstellung der Vorspannung des Bremssystems (4) eine hohe Priorität aufweist.

4. Fahrerassistenzsystem (14) nach einem der vorherigen Ansprüche, **dadurch gekennzeichnet, dass** das externe Bremsanforderungssignal (S6) ein Steuermodus-Signal (S6-2) aufweist, das zur Einstellung der Vorspannung des Bremssystems (4) eine Maximalwertbildung zwischen dem externen Bremsanforderungswert (a-soll) und einem internen Bremsanforderungswert anzeigt.

5. Fahrerassistenzsystem (14) nach einem der vorherigen Ansprüche, **dadurch gekennzeichnet, dass** das Detektionssystem (17) ein Umfelderkennungssystem (17) ist oder aufweist und der mindestens eine Sensor (15-1, 15-2, 15-3) fremde Objekte (20) erfasst.

6. Fahrerassistenzsystem (14) nach Anspruch 5, **dadurch gekennzeichnet, dass** der mindestens eine Sensor (15-1, 15-2, 15-3) Abstände (d) zu den erfassten externen Objekten (20) ermittelt, und das Fahrerassistenzsystem (14) für eine Kollisionsdetektion, eine Kollisionsverminderung, ein Abstandshaltesystem, ein Fußgängerdetektionssystem und/oder ein automatisches Kolonnenfahrsystem vorgesehen ist, wobei die Steuereinheit (16) als den kritischen Zustand des Fahrzeugs (1) eine Kollision mit dem erfassten externen Objekt (20) prüft und bei Ermittlung einer hinreichend hohen Wahrscheinlichkeit einer Kollision das externe Bremsanforderungssignal (S6) zum Vorspannen des Bremssystems (4) ausgibt.

7. Fahrerassistenzsystem (14) nach einem der vorherigen Ansprüche, **dadurch gekennzeichnet, dass** die Steuereinheit (16) des Fahrerassistenzsystems (14) als einen kritischen Zustand einen instabilen Fahrzustand des Fahrzeugs (1), z. B. einen drohenden Überschlag und/oder Schleuderzustand des Fahrzeugs (1) detektiert und bei Ermittlung einer hinreichend hohen Wahrscheinlichkeit eines instabilen Fahrzustand des Fahrzeugs (1) das externe Bremsanforderungssignal (S6) zum Vorspannen des Bremssystems (4) ausgibt.

8. Fahrerassistenzsystem (14) nach einem der vorherigen Ansprüche, **dadurch gekennzeichnet, dass** das Beschleunigungs-Sollwert-Signal (S6-3) zum Vorspannen des Bremssystems (4) einen positiven Beschleunigungs-Sollwert (a-soll) für eine positive Beschleunigung des Fahrzeugs (1) aufweist.

9. Fahrerassistenzsystem (14) nach einem der vorherigen Ansprüche, **dadurch gekennzeichnet, dass** das externe Bremsanforderungssignal (S6) fortlaufend über einen Daten-Bus (5) des Fahrzeugs (1) ausgegeben wird.

10. Fahrerassistenzsystem (14) nach einem der vorherigen Ansprüche, **dadurch gekennzeichnet, dass** die Steuereinheit (16) in mindestens einem der Sensoren (15-1, 15-2, 15-3) integriert ist.

11. Fahrzeugsystem für ein Fahrzeug (1), das aufweist:
ein Bremssystem (4) mit einer Bremssteuereinrichtung (6) und Bremsen (4-1, 4-2, 4-3, 4-4, 4-5, 4-6) zum Bremsen von Rädern (3-1, 3-2, 3-3, 3-4, 3-5, 3-6) des Fahrzeugs (1), und
ein Fahrerassistenzsystem nach einem der vorherigen Ansprüche,
wobei die Steuereinheit (16) des Fahrerassistenzsystems (14) das externe Bremsanforderungssignal (S6) an die Bremssteuereinrichtung (6) des Bremssystems (4) ausgibt und die Bremssteuereinrichtung (6) Bremsungen aufgrund interner Bremsanforderung und des externen Bremsanforderungssignals (S6) einleitet durch Beaufschlagung der Bremsen (4-1 bis 4-6) mit einem Bremsmedium,
wobei die Bremssteuereinrichtung (6) zum Vorspannen des Bremssystems (4) eine Erhöhung des Drucks des Bremsmediums einleitet zur Verringerung einer Totzeit für den Fall eines nachfolgenden Bremsvorgangs.

12. Fahrzeugsystem nach Anspruch 11, **dadurch gekennzeichnet, dass** das Bremssystem (4) ein pneumatisches Bremssystem (4) mit pneumatischen Bremsen (4-1, 4-2, 4-3, 4-4, 4-5, 4-6) ist, wobei die Bremssteuereinrichtung (6) zum Vorspannen des Bremssystems (4) ein Lüftspiel in den pneumatischen Bremsen (4-1, 4-2, 4-3, 4-4, 4-5, 4-6) überwindet.

13. Verfahren zum Steuern eines Bremssystems (4) eines Fahrzeugs (1), mit mindestens folgenden Schritten:
Detektion kritischer Situationen und/oder kritischer Zustände des Fahrzeugs (1), insbesondere von Kollisionen oder Instabilitäten des Fahrzeugs, durch ein Fahrerassistenzsystem (14) (St1) und Ausgabe über eine Datenleitung eines externen Bremsanforderungssignals (S6) von dem externen Fahrerassistenzsystem (14) an eine Bremssteuereinrichtung (6) des Bremssystems (4) (St2, St4),
wobei die Bremssteuereinrichtung (6) Bremsungen des Fahrzeugs (1) einleitet auf Grundlage interner Bremsanforderungen und des externen Bremsanforderungssignals (S6),
wobei das Fahrerassistenzsystem (14) ein Vorspannen des Bremssystems (4) anfordert bei Erkennen einer hinreichenden Wahrscheinlichkeit eines kritischen Zustandes und/oder einer kritischen Situation, **dadurch gekennzeichnet, dass**
das Fahrerassistenzsystem (14) zum Vorspannen des Bremssystems (4) einen Beschleunigungssollwert (a-soll) anfordert, der höher ist als der aktuelle Beschleunigungs-Istwert (a-ist).

## Claims

1. Driver assistance system (14) for a vehicle (1), in particular commercial vehicle, wherein the driver assistance system (14) has:
a detection system (17) which has at least one sensor (15-1, 15-2, 15-3) for outputting measurement signals (S5-1, S5-2, S5-3),
a control unit (16) for receiving the measurement signals (S5-1, S5-2, S5-3) and determining a probability of a critical situation or of a critical state of the vehicle (1),
wherein, when a critical state or a sufficient probability of a critical state is detected, the control unit (16) of the driver assistance system (14) outputs a signal (S6) for biasing a brake system (4) to a brake control device (6) of the brake system (4) of the vehicle (1), and
wherein the control unit (16) outputs via a data line an external brake request signal (S6) for initiating braking processes to the brake control device (6) of the brake system (4),
**characterized in that**
the control unit (16) outputs via a data line, for the purpose of biasing the brake system (4), an external brake request signal (S6) which has an acceleration setpoint value signal (S6-3) with a higher acceleration setpoint value (a-soll) than a current acceleration actual value (a-ist).

2. Driver assistance system (14) according to Claim 1, **characterized in that** it is embodied outside the brake system (4) and outputs the external brake request signals (S6) to the brake control device (6) via a data line (5), in particular a data bus (5) of the vehicle.

3. Driver assistance system (14) according to Claim 1 or 2, **characterized in that** the external brake request signal (S6) contains a priority signal (S6-1) which has a high priority for the purpose of setting the biasing of the brake system (4).

4. Driver assistance system (14) according to one of the preceding claims, **characterized in that** the external brake request signal (S6) has a control mode signal (S6-2) which, for the purpose of setting the biasing of the brake system (4), indicates formation of a maximum value between the external brake request value (a-soll) and an internal brake request value.

5. Driver assistance system (14) according to one of the preceding claims, **characterized in that** the detection system (17) is or has a surroundings detection system (17), and the at least one sensor (15-1, 15-2, 15-3) senses foreign objects (20).

6. Driver assistance system (14) according to Claim 5, **characterized in that** the at least one sensor (15-1, 15-2, 15-3) determines distances (d) from the sensed external objects (20), and the driver assistance system (14) is provided for collision detection, collision reduction, an inter-vehicle distance maintaining system, a pedestrian detection system and/or a system for driving in a line automatically,
wherein the control unit (16) checks for a collision with the detected external object (20) as the critical state of the vehicle (1), and when a sufficiently high probability of a collision is determined said control unit (16) outputs the external brake request signal (S6) for biasing the brake system (4).

7. Driver assistance system (14) according to one of the preceding claims, **characterized in that** the control unit (16) of the driver assistance system (14) detects an unstable driving state of the vehicle (1), for example an imminent rollover and/or skidding state of the vehicle (1), as a critical state, and when a sufficiently high probability of an unstable driving state of the vehicle (1) is determined said control unit (16) outputs the external brake request signal (S6) for biasing the brake system (4).

8. Driver assistance system (14) according to one of the preceding claims, **characterized in that** the acceleration setpoint value signal (S6-3) for biasing the brake system (4) has a positive acceleration setpoint value (a-soll) for a positive acceleration of the vehicle (1).

9. Driver assistance system (14) according to one of the preceding claims, **characterized in that** the external brake request signal (S6) is continuously output via a data bus (5) of the vehicle (1).

10. Driver assistance system (14) according to one of the preceding claims, **characterized in that** the control unit (16) is integrated into at least one of the sensors (15-1, 15-2, 15-3).

11. Vehicle system for a vehicle (1) which has:
a brake system (4) having a brake control device (6) and brakes (4-1, 4-2, 4-3, 4-4, 4-5, 4-6) for braking wheels (3-1, 3-2, 3-3, 3-4, 3-5, 3-6) of the vehicle (1), and
a driver assistance system according to one of the preceding claims, wherein the control unit (16) of the driver assistance system (14) outputs the external brake request signal (S6) to the brake control device (6) of the brake system (4), and
the brake control device (6) initiates braking operations on the basis of an internal brake request and of the external brake request signal (S6) by applying a braking medium to the brakes (4-1 to 4-6), wherein the brake control device (6) initiates, for the purpose of biasing the brake system (4), an increase in the pressure of the braking medium in order to reduce a lag time in the event of a subsequent braking process.

12. Vehicle system according to Claim 11, **characterized in that** the brake system (4) is a pneumatic brake system (4) having pneumatic brakes (4-1, 4-2, 4-3, 4-4, 4-5, 4-6), wherein the brake control device (6) overcomes clearance in the pneumatic brakes (4-1, 4-2, 4-3, 4-4, 4-5, 4-6) in order to bias the brake system (4).

13. Method for controlling a brake system (4) of a vehicle (1) having at least the following steps:
detection of critical situations and/or critical states of the vehicle (1), in particular of collisions or instabilities of the vehicle, by a driver assistance system (14) (St1) and outputting via a data line of an external brake request signal (S6) from the external driver assistance system (14) to a brake control device (6) of the brake system (4) (St2, St4),
wherein the brake control device (6) initiates braking operations of the vehicle (1) on the basis of internal brake requests and of the external brake request signal (S6),
wherein the driver assistance system (14) requests biasing of the brake system (4) when a sufficient probability of a critical state and/or a critical situation is detected,
**characterized in that**
the driver assistance system (14) requests, for the purpose of biasing the brake system (4), an acceleration setpoint value (a-soll) which is higher than the current acceleration actual value (a-ist).

## Revendications

1. Système (14) d'assistance au conducteur d'un véhicule (1), en particulier d'un véhicule utilitaire, le système (14) d'assistance au conducteur présentant :
un système de détection (17) qui présente au moins un capteur (15-1, 15-2, 15-3) qui délivre des signaux de mesure (S5-1, S5-2, S5-3),
une unité de commande (16) qui reçoit les signaux de mesure (S5-1, S5-2, S5-3) et qui détermine la probabilité d'une situation critique ou d'un état critique du véhicule (1),
l'unité de commande (16) du système (14) d'assistance au conducteur délivrant un signal (S6) de pré-serrage d'un système de freinage (4) à un dispositif (6) de commande des freins du système de freinage (4) du véhicule (1) en cas de détection d'un état critique ou d'une probabilité suffisante d'un état critique et
l'unité de commande (16) délivrant au dispositif (6) de commande de freinage du système de freinage (4), par l'intermédiaire d'un conducteur de données, un signal externe (S6) de demande de freinage pour lancer des opérations de freinage,
**caractérisé en ce que**
en vue de précontraindre le système de freinage (4), l'unité de commande (16) délivre par l'intermédiaire d'un conducteur de données un signal externe (S6) de demande de freinage qui présente un signal (S6-3) de valeur de consigne d'accélération dont la valeur de consigne (a-soll) d'accélération est plus élevée que la valeur effective (a-ist) de l'accélération en cours.

2. Système (14) d'assistance au conducteur selon la revendication 1, **caractérisé en ce qu'**il est formé à l'extérieur du système de freinage (4) et **en ce qu'**il délivre au dispositif (6) de commande de freinage les signaux externes (S6) de demande de freinage par un conducteur de données (5), en particulier un bus (5) de données du véhicule.

3. Système (14) d'assistance au conducteur selon les revendications 1 ou 2, **caractérisé en ce que** le signal externe (S6) de demande de freinage contient un signal de priorité (S6-1) qui présente une priorité élevée d'établissement de la précontrainte du système de freinage (4).

4. Système (14) d'assistance au conducteur selon l'une des revendications précédentes, **caractérisé en ce que** le signal externe (S6) de demande de freinage présente un signal (S6-2) de mode de commande qui indique, pour l'établissement de la précontrainte du système de freinage (4), une valeur maximale comprise entre la valeur externe (a-soll) de demande de freinage et une valeur interne de demande de freinage.

5. Système (14) d'assistance au conducteur selon l'une des revendications précédentes, **caractérisé en ce que** le système de détection (17) est un système (17) de détection de l'environnement ou le présente et **en ce que** le ou les capteurs (15-1, 15-2, 15-3) détectent des objets étrangers (20).

6. Système (14) d'assistance au conducteur selon la revendication 5, **caractérisé en ce que** le ou les capteurs (15-1, 15-2, 15-3) déterminent les distances (d) par rapport aux objets externes (20) détectés, le système (14) d'assistance au conducteur étant prévu pour détecter les collisions, réduire les collisions, étant un système de maintien de distance, un système de détection de piétons et/ou un système automatique de conduite en colonne, l'unité de commande (16) vérifiant comme état critique du véhicule (1) une collision avec l'objet externe (20) détecté et, lors de la détermination d'une probabilité suffisamment élevée de collision, délivre le signal externe (S6) de demande de freinage en vue de précontraindre système de freinage (4).

7. Système (14) d'assistance au conducteur selon l'une des revendications précédentes, **caractérisé en ce que** l'unité de commande (16) du système (14) d'assistance au conducteur détecte comme situation critique une situation de roulage instable du véhicule (1), par exemple la menace d'un tonneau et/ou une situation de survitesse du véhicule (1) et, lors de la détermination que la probabilité d'une situation de roulage instable du véhicule (1) est suffisamment élevée, délivre le signal externe (S6) de demande de freinage en vue de précontraindre le système de freinage (4).

8. Système (14) d'assistance au conducteur selon l'une des revendications précédentes, **caractérisé en ce que** le signal (S6-3) de valeur de consigne d'accélération présente en vue de la précontrainte du système de freinage (4) une valeur de consigne positive (a-soll) d'accélération de l'accélération positive du véhicule (1).

9. Système (14) d'assistance au conducteur selon l'une des revendications précédentes, **caractérisé en ce que** le signal externe (S6) de demande de freinage est délivré en permanence par l'intermédiaire d'un bus (5) de données du véhicule (1).

10. Système (14) d'assistance au conducteur selon l'une des revendications précédentes, **caractérisé en ce que** l'unité de commande (16) est intégrée dans au moins l'un des capteurs (15-1, 15-2, 15-3).

11. Système pour un véhicule (1), le système présentant :
un système de freinage (4) doté d'un dispositif (6) de commande de freinage et de freins (4-1, 4-2, 4-3, 4-4, 4-5, 4-6) qui freinent les roues (3-1, 3-2, 3-3, 3-4, 3-5, 3-6) du véhicule (1) et
un système d'assistance au conducteur selon l'une des revendications précédentes,
l'unité de commande (16) du système (14) d'assistance au conducteur délivrant le signal externe (S6) de demande de freinage au dispositif (6) de commande de freinage du système de freinage (4) et le dispositif (6) de commande de freinage lançant des freinages sur la base d'une demande interne de freinage et du signal externe (S6) de demande de freinage en appliquant un fluide de freins sur les freins (4-1 à 4-6),
le dispositif (6) de commande de freinage lançant pour précontraindre le système de freinage (4) une augmentation de la pression des freins pour diminuer le temps mort pour le cas où une opération de freinage suivrait.

12. Système pour véhicule selon la revendication 11, **caractérisé en ce que** le système de freinage (4) est un système pneumatique de freinage (4) doté de freins pneumatiques (4-1, 4-2, 4-3, 4-4, 4-5, 4-6), le dispositif (6) de commande de freinage surmontant le jeu pneumatique des freins pneumatiques (4-1, 4-2, 4-3, 4-4, 4-5, 4-6) en vue de précontraindre le système de freinage (4).

13. Procédé de commande d'un système de freinage (4) d'un véhicule (1), le procédé présentant au moins les étapes suivantes :
détection de situations critiques et/ou d'états critiques du véhicule (1), en particulier de collisions ou d'instabilités du véhicule, par un système (14) d'assistance au conducteur (St1) et fourniture par l'intermédiaire d'un conducteur de données d'un signal externe (S6) de demande de freinage par le système externe (14) d'assistance au conducteur à un dispositif (6) de commande de frein du système de freinage (4) (St2, St4),
le dispositif (6) de commande de frein lançant des freinages du véhicule (1) sur la base de demandes internes de freinage et du signal externe (S6) de demande de freinage,
le système (14) d'assistance au conducteur demandant une précontrainte du système de freinage (4) lors de la détection d'une probabilité suffisante d'un état critique et/ou d'une situation critique, **caractérisé en ce que**
le système (14) d'assistance au conducteur demande pour la précontrainte du système de freinage (4) une valeur de consigne (a-soll) d'accélération supérieure à la valeur effective (a-ist) de l'accélération en cours.
